# EUROPÄISCHE PATENTSCHRIFT

(11) **EP 2 879 924 B1**
(45) Veröffentlichungstag und Bekanntmachung des Hinweises auf die Patenterteilung: **02.10.2019**
(21) Anmeldenummer: 13736830.4
(22) Anmeldetag: 03.07.2013
(51) Int. Cl.: B60T 7/06, B29B 11/16, G05G 1/50

(54) **BETÄTIGUNGSPEDAL FÜR EIN KRAFTFAHRZEUG**
VEHICLE PEDAL
PÉDALE DE VÉHICULE

(30) Priorität: 02.08.2012 DE 102012213665
(43) Veröffentlichungstag der Anmeldung: 10.06.2015
(73) Patentinhaber: ZF Friedrichshafen AG, 88046 Friedrichshafen (DE)
(72) Erfinder: WAGENER, Keit, 49143 Bissendorf (DE); DUETZ, Jan, 26434 Wangerland (DE); KAMPHAUS, Thorsten, 49393 Lohne (DE); TIEMANN, Burkhard, 49152 Bad Essen (DE); LAGEMANN, Bernard, 49434 Neuenkirchen (DE)
(86) Internationale Anmeldenummer: PCT/EP2013/063979
(87) Internationale Veröffentlichungsnummer: WO 2014/019793

(56) Entgegenhaltungen:
- EP-A1- 0 788 954
- DE-A1-102008 033 621
- DE-A1-102011 003 222
- US-A- 4 598 457
- US-A1- 2011 020 572

## Beschreibung

Die Erfindung betrifft ein Betätigungspedal für ein Kraftfahrzeug, insbesondere ein Kupplungspedal oder ein Fußpedal für eine Feststellbremse, gemäß dem Oberbegriff des Patentanspruchs 1.

Gattungsgemäße Betätigungspedale der eingangs genannten Art werden seit langem bei Nutz- und Kraftfahrzeugen eingesetzt. Die Betätigungspedale haben hierbei hohen Anforderungen hinsichtlich Festigkeit und Verwindungssteifigkeit zu genügen. Dabei können - insbesondere in Situationen von Panik- oder Vollbremsungen - vom Fahrzeugführer außerordentlich hohe Kräfte auf das Betätigungspedal ausgeübt werden - insbesondere, wenn dieses als Bremspedal ausgebildet ist.

Eine hohe Verwindungssteifigkeit ist bei einem Betätigungspedal auch deshalb wünschenswert und erforderlich, um beim Treten des Betätigungspedals jederzeit ein direktes und sicheres Gefühl für den Fahrzeugführer bereitzustellen, und ein seitliches Abrutschen vom Pedal zu vermeiden.

Aufgrund dieser Erfordernisse sind die gegenwärtig aus dem Stand der Technik bekannten und eingesetzten Betätigungspedale üblicherweise aus Stahl gefertigt. Zumeist werden derartige Betätigungspedale aus Stahlblech hergestellt, wobei der Herstellungsvorgang typischerweise mehrere Umformprozesse umfasst. Zusätzlich werden an den Pedalkörper als Basisblechteil nach der Umformung weitere Bauteile - beispielsweise zur Lagerung, zur Anbringung von Rückholfedern oder zur Betätigung von Endschaltern - angeschweißt.

Die damit verbundene erhebliche Anzahl separater Bearbeitungsschritte verursacht - trotz des Einsatzes von Automatisierungstechnik bei der Herstellung derartiger gattungsgemäßer Betätigungspedale - auch im Vergleich zu anderen Fahrzeugkomponenten vergleichsweise hohe Kosten, zumal nach Beendigung des eigentlichen Formvorganges zusätzlich eine abschließende Oberflächenbehandlung in Form eines Farbanstrichs oder in Form einer korrosionsschützenden Beschichtung üblich bzw. erforderlich ist.

Auch sind die zur Formgebung des metallischen Pedalkörpers benötigten Tiefziehwerkzeuge vergleichsweise aufwändig und damit teuer in der Herstellung. Nicht zuletzt weisen die im Stand der Technik verwendeten, im Wesentlichen aus Stahl gefertigten Betätigungspedale auch eine vergleichsweise hohe Masse auf, wodurch das Leergewicht eines Kraftfahrzeugs dementsprechend erhöht wird.

Aus der DE 199 21 552 C2 ist ein insbesondere für die Bremsanlage eines Kraftfahrzeugs vorgesehenes Betätigungspedal bekannt, welches aus einem stählernen Metallkern und einer den Metallkern umgebenden Kunststoffummantelung besteht. Dieses aus dem Stand der Technik bekannte Betätigungspedal weist jedoch nach wie vor eine vergleichsweise hohe Masse auf. Gleichzeitig sind bei diesem Stand der Technik die mit dem Metallkern verbundenen, vergleichsweise hohen Herstellungskosten nach wie vor gegeben. Auch führt der bei diesem bekannten Betätigungspedal gewählte, nicht geschlossene Querschnitt dazu, dass bei der Betätigung - aufgrund der damit vergleichsweise geringen Torsionssteifigkeit - Verwindungen auftreten können.

Darüber hinaus sind im Stand der Technik auch Betätigungspedale bekannt, welche vollständig aus Kunststoff hergestellt sind. Diese sind zwar relativ kostengünstig herstellbar und weisen ein geringeres Gewicht auf als Pedale, die Metallteile enthalten. Jedoch ist das Erreichen der erforderlichen Festigkeit und Steifigkeit bei der Ausführung von Betätigungspedalen aus Vollkunststoff problematisch. Zudem zeigen derartige Pedale eine relativ ausgeprägte Temperaturabhängigkeit ihrer mechanischen Eigenschaften. Ein Beispiel hierfür ist das Dokument DE10 2011 003 222 A1, das ein Betätigungspedal mit Träger in U-form, hergestellt aus Organoblech, beschreibt.

Vor diesem Hintergrund ist es somit Aufgabe der vorliegenden Erfindung, ein Betätigungspedal bereitzustellen, mit dem die genannten im Stand der Technik vorhandenen Einschränkungen überwunden werden. Insbesondere sollen mit der Erfindung kostengünstig herstellbare Betätigungspedale geschaffen werden, die mit besonders geringer Masse hergestellt werden können und die somit das Leergewicht eines Kraftfahrzeugs, in welches sie eingebaut werden, nur unwesentlich erhöhen, dabei jedoch gleichzeitig die erforderliche Festigkeit und Steifigkeit aufweisen.

Diese Aufgabe wird durch ein Betätigungspedal mit den Merkmalen des Patentanspruchs 1 gelöst. Bevorzugte Ausführungsformen sind Gegenstand der Unteransprüche.

Erfindungsgemäß wird ein Betätigungspedal für ein Kraftfahrzeug in Form eines Kupplungspedals oder Fußpedals für eine Feststellbremse bereitgestellt, wobei das Betätigungspedal einen Pedalkörper mit einem aus einem endlosfaserverstärkten Kunststoff hergestellten Profilträger, eine Lagereinrichtung zur schwenkbaren Lagerung des Betätigungspedals und eine Betätigungstrittfläche umfasst, wobei die Lagereinrichtung und die Betätigungstrittfläche aus Kunststoff hergestellt sind, und wobei der Profilträger zumindest abschnittweise als ein offenes U-förmiges, als ein offenes L-förmiges oder als ein geschlossenes rohrförmiges Profil aus Organoblech ausgebildet ist, vorzugsweise in Form eines vorgefertigten Organoblecheinlegers, an welches die Lagereinrichtung, die Betätigungstrittfläche und weitere Kunststoffelemente angespritzt sind. Eine solche Ausführung des Betätigungspedals, welches speziell als Kupplungspedal oder als Fußpedal für eine Feststellbremse ausgebildet ist, komplett aus Kunststoff mit einem Profilträger aus Organoblech erlaubt eine kostengünstige Herstellung bei geringen Materialkosten.

Bei Organoblechen handelt es sich um quasi endlosfaserverstärkte, thermoplastische Kunststoffe, beispielsweise mit Polyamid 6 als Matrix, wobei die Fasern nur in einer Richtung orientiert oder rechtwinklig zueinander als Gewebe angeordnet sein können. Bei den Fasern kann es sich um als Glasfasern, Aramidfasern oder Carbonfasern handeln. Organobleche lassen sich nach vorheriger Erwärmung ähnlich wie Metallbleche umformen und eignen sich wegen ihrer hohen Festigkeit und Steifigkeit bei geringer Dichte vorteilhaft als Leichtbauwerkstoff. Insbesondere erfüllen geeignet ausgewählte Organobleche alle Anforderungen an die mechanische Belastbarkeit bei Pedalanwendungen, beispielsweise im Hinblick auf die Torsions- und Biegesteifigkeit. Im Rahmen der Produktion des erfindungsgemäßen Betätigungspedals kann im Vergleich zu der Herstellung eines Betätigungspedals aus Metall eine ganze Anzahl von Fertigungsschritten entfallen, wie die nicht mehr notwendige abschließende Oberflächenbehandlung (insbesondere Korrosionsschutz bzw. Lackierung) des erfindungsgemäßen Betätigungspedals.

Darüber hinaus weist das so gebildete Betätigungspedal auch im Vergleich zu herkömmlichen Vollkunststoff-Pedalen ein geringes Gewicht und gleichzeitig die notwendige Festigkeit und Steifigkeit auf, welche einerseits durch die Verwendung von endlosfaserverstärktem Kunststoff (Organoblech) für den Profilträger und andererseits durch die spezielle Formgebung des Profilträgers erzielt wird. Darüber hinaus wird durch die vorliegende Erfindung eine freie und optimierte Formgebung für das Betätigungspedal ermöglicht.

Gemäß einer bevorzugten Ausführungsform ist der Profilträger mit der daran angespritzten Lagereinrichtung, Betätigungsfläche und weiteren Kunststoffelementen mittels eines One-Shot-Verfahrens hergestellt. Dies bietet den Vorteil, dass der ansonsten separate Umformschritt des Organoblech-Profilträgers in das Spritzgießwerkzeug verlegt wird und somit Umformen und Anspritzen in einem einzigen Prozessschritt durchgeführt werden.

Gemäß noch einer bevorzugten Ausführungsform ist das geschlossene rohrförmige Profil zweiteilig aus einer ersten Rohrhälfte und einer zweiten Rohrhälfte mit jeweilig auskragenden Längsrändern aufgebaut, wobei die Längsränder der ersten und zweiten Rohrhälften mit Kunststoff umspritzt sind, um die erste und zweite Rohrhälfte aneinander zu fixieren. Die Umspritzung der Längsränder bietet neben der Fixierung der zwei Rohrhälften aneinander dem Profil auch zusätzliche Stabilität.

Gemäß noch einer weiteren bevorzugten Ausführungsform ist der Profilträger ein offenes U- oder L-förmiges Profil, welches nach unten bzw. seitlich offen ist.

Vorzugsweise weist der Profilträger im Zuge einer Weiterentwicklung ein erstes und ein zweites offenes U-förmiges Profil auf, welche jeweils ein Bodenteil (mittlerer Schenkel) mit zwei davon abragenden Schenkelteilen (freie Schenkel) aufweisen, wobei die Bodenteile des ersten und zweiten U-förmigen Profils aneinander anliegend angeordnet sind, so dass die jeweils davon abragenden Schenkelteile des ersten und zweiten U-förmigen Profils in entgegengesetzte Richtungen weisen und so eine Art I-Profil oder Doppel-T-Profil bilden. Diese Variante erreicht eine besonders hohe Festigkeit und Steifigkeit.

Es ist auch möglich, den Profilträger nicht vollständig gerade sondern gekröpft auszubilden.

Besonders bevorzugt ist es auch, wenn in den Profilträger zusätzliche Verstärkungselemente, insbesondere kreuzweise angeordnete Verstärkungsrippen, aufweist. Die Verstärkungselemente können auch wabenförmig angeordnet sein. Hierdurch wird die Festigkeit und Steifigkeit des Betätigungspedals noch weiter verbessert. Die Verstärkungselemente sind vorzugsweise in das (offene) Profil des Profilträgers eingespritzt.

Darüber hinaus ist es vorteilhaft, wenn die an den Profilträger angespritzten Kunststoffelemente, die Betätigungsplatte und die Lagereinrichtung aus einem Thermoplast, insbesondere aus PA6 GF40, Polypropylen oder Polyamid, bestehen. Da die Matrix des endlosfaserverstärkten Kunststoffs in Form des Organoblechs, aus welchem der Profilträger hergestellt ist, auch einen Thermoplast umfasst, kann zwischen dem Profilträger und dem angespritzten Kunststoffelement dann eine besonders innige Verbindung hergestellt werden. Besonders vorteilhaft ist es hierbei, wenn die Matrix des Organoblechs, aus welchem der Profilträger hergestellt ist, und das daran angespritzte Kunststoffelement den gleichen Thermoplast aufweisen.

Gemäß noch einer weiteren bevorzugten Ausführungsform bildet der Profilträger die eigentliche Struktur des Pedalkörpers, was diesem eine gute Formstabilität verleiht, wobei der Profilträger zumindest abschnittweise eine Außenkontur des Pedals bilden kann.

Es ist weiterhin von Vorteil, wenn die Kunststoffelemente Funktionselemente und/oder Aufnahmen für Funktionselemente und/oder Anbindungen für Funktionselemente umfassen.
Insbesondere können an dem Pedalkörper des Betätigungspedals einstückig die Lagereinrichtung zur Verbindung des Betätigungspedals mit dem karosseriefesten Pedalblock und/oder weiteren Lagerpunkte, Anschlussteile, Anschläge bzw. Kraftangriffspunkte für Schalter, Federn oder dergleichen vorgesehen sein, vorzugsweise durch Anspritzen. Auf diese Weise kann im Wesentlichen das gesamte Betätigungspedal einschließlich sämtlicher der genannten funktionalen Bereiche einstückig hergestellt werden, wodurch sowohl der Herstellungsaufwand als auch die Bauteilstückkosten, ebenso wie die Bauteilmasse weiter maßgeblich reduziert werden können.

Vorzugsweise umfassen die genannten Kunststoffelemente eine Aufnahme für eine Übertotpunktfeder, eine Aufnahme für eine Rückzugfeder, eine Aufnahme für einen Kupplungsgeberzylinder (KGZ) und/oder eine Aufnahme für eine Druckstange und/oder eine Aufnahme zur Entriegelung, wobei diese Aufzählung nicht abschließend ist.

Noch eine weitere bevorzugte Ausführungsform sieht vor, dass die Kunststoffelemente einen Schaltnocken zur Identifizierung einer Schaltstellung, einen Anschlag, insbesondere einen Pedalanschlag, ein Element zur Betätigung eines Drehwinkelsensors und/oder ein Abweiserelement umfassen.

Im Falle der Ausbildung des Betätigungspedals als Kupplungspedal ist es besonders vorteilhaft, wenn eine Clutch-by-Wire-Funktion in das Betätigungspedal integriert ist, was eine Kupplungsfunktionalität ohne echte mechanische Verbindung bzw. Betätigung ermöglicht.

Darüber hinaus ist es vorteilhaft, wenn ein Force-Simulator in das Betätigungspedal integriert ist, um insbesondere auch bei elektronisch ausgeführter Kupplungsfunktionalität dem Fahrer das bekannte Betätigungsgefühl zu vermitteln.

Weiterhin ist es vorteilhaft, wenn ein Drehwinkelsensor an dem Betätigungspedal angeordnet ist. Besonders bevorzugt ist es, wenn ein Drehpotentiometer zur Messung der Winkelstellung eingesetzt wird, da dies eine kostengünstige Lösung zur Erfassung der Drehung ist, die zudem mit Standardserienbauteilen zu realisieren ist.

Vorzugsweise ist auch ein Schalter zur Signalgebung in das Betätigungspedal integriert.

Vorteilhaft ist darüber hinaus das Vorsehen von Dämpfungselementen an dem Betätigungspedal.

Auch kann ein Griff an dem Betätigungspedal vorgesehen sein, der insbesondere an den Profilträger angespritzt ist.

Besonders bevorzugt ist der Profilträger ein Organoblech-Einleger, d.h. ein vorgefertigtes Strukturbauteil aus Organoblech.

Gemäß einem anderen Aspekt der Erfindung ist weiterhin die Verwendung eines Organoblech-Einlegers für ein Betätigungspedal gemäß den obigen Ausführungsformen, d.h. zur Herstellung eines solchen Pedals vorgesehen, was die bereits oben aufgeführten Vorteile mit sich bringt.

Ausführungsbeispiele der Erfindung sind in der Zeichnung dargestellt und in der nachfolgenden Beschreibung näher erläutert. Es zeigen:
- Figuren 1A - 1D: isometrische Ansichten eines Betätigungspedals gemäß einer Ausführungsform der Erfindung;
- Figuren 2A - 2B: Ansichten eines Betätigungspedals gemäß einer weiteren Ausführungsform der Erfindung;
- Figuren 3A - 3B: Ansichten eines Betätigungspedals gemäß noch einer weiteren Ausführungsform;
- Figuren 4A - 4C: jeweilige Ansichten eines Abschnitts eines Profilträgers eines Betätigungspedals gemäß einer Ausführungsform;
- Figuren 5A - 5C: jeweilige Ansichten eines Abschnitts eines Profilträgers eines Betätigungspedals gemäß einer weiteren Ausführungsform;
- Figuren 6A - 6E: jeweilige Ansichten eines Pedalkörpers eines Betätigungspedals gemäß einer weiteren Ausführungsform;
- Figuren 7A - 7C: jeweilige weitere Ansichten des in den Figuren 6A bis 6D dargestellten Pedalkörpers;
- Figur 8: eine Vorderansicht eines Betätigungspedals gemäß noch einer weiteren Ausführungsform;
- Figuren 9A - 9B: jeweilige schematische Ansichten einer Pedalhebellagerung gemäß einer Ausführungsform; und
- Figuren 10A - 10B: jeweilige schematische Ansichten einer Pedalhebellagerung gemäß noch einer weiteren Ausführungsform.

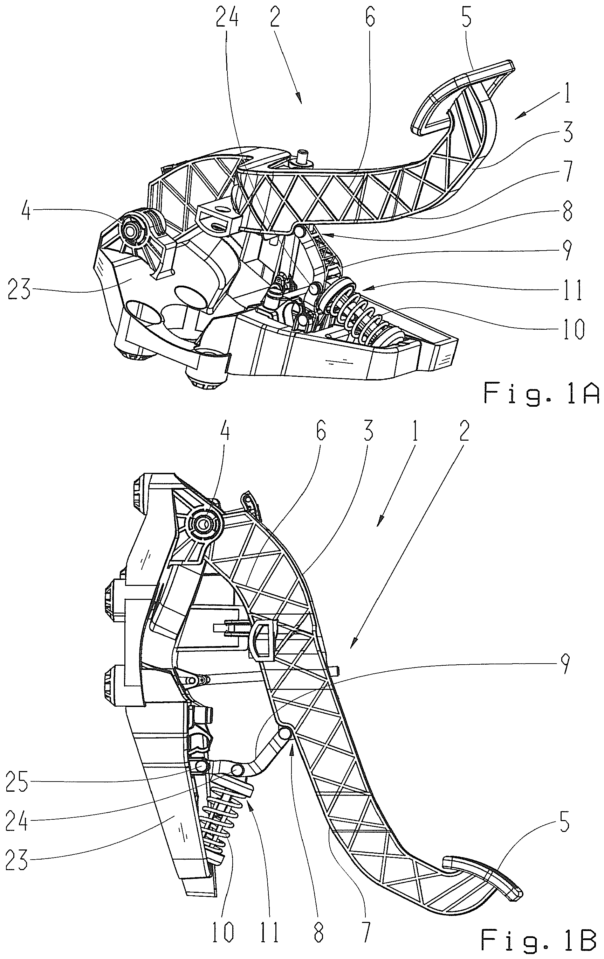

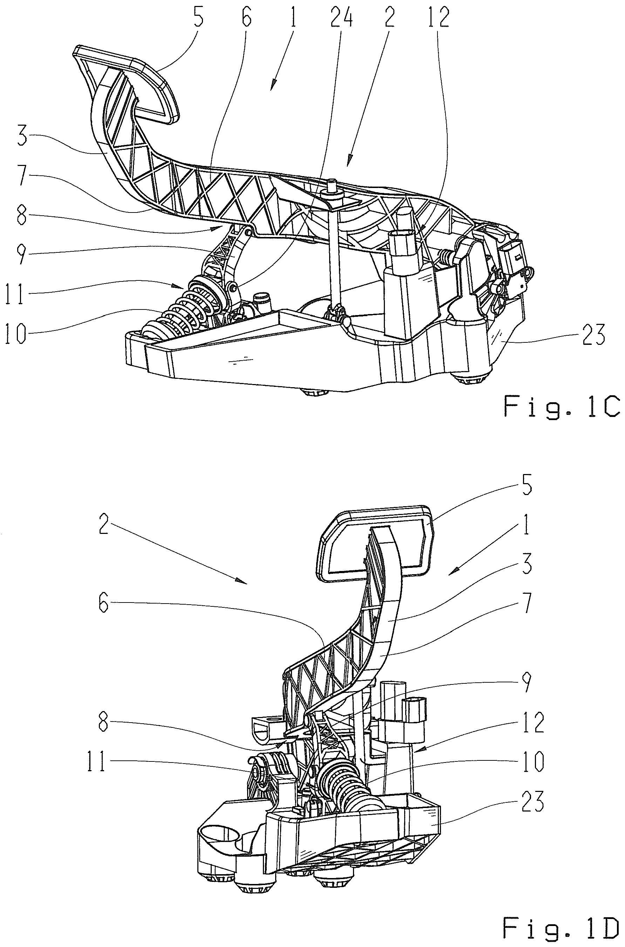

Figuren 1A bis 1 D zeigen jeweilige isometrische Ansichten eines Betätigungspedals 1 gemäß einer Ausführungsform der Erfindung, wobei Figur 1A eine Ansicht des Betätigungspedals 1 schräg von vorne, Figur 1B eine Ansicht des Betätigungspedals 1 von der Seite, Figur 1C eine Ansicht des Betätigungspedals 1 schräg von hinten und Figur 1D eine Ansicht des Betätigungspedals 1 von hinten ist. Bei der hier dargestellten Ausführungsform ist das Betätigungspedal 1 als Kupplungspedal ausgebildet, welches einen Pedalkörper 2 mit einem aus einem endlosfaserverstärkten Kunststoff bzw. aus Organoblech hergestellten Profilträger 3, eine Lagereinrichtung 4 zur schwenkbaren Lagerung des Betätigungspedals 1 an einem Lagerbock und eine Betätigungstrittfläche 5 umfasst. Die Lagereinrichtung 4 und die Betätigungstrittfläche 5 sind aus Kunststoff gebildet und an den Profilträger 3 aus Organoblech im One-Shot-Verfahren angespritzt, was bedeutet, dass auch eine Umformung des Organoblechs selbst innerhalb des Spritzgusswerkzeugs erfolgt. Weiterhin werden bei diesem Prozess an den Profilträger 3, welcher hier als seitlich offenes im Wesentlichen U-förmiges Profil ausgebildet ist, kreuzförmig angeordnete und als Verstärkungsrippen ausgebildete Verstärkungselemente 6 angespritzt.

Darüber hinaus können, wie eingangs bereits beschrieben, weitere Kunststoffelemente an den Profilträger 3 angespritzt sein. Beispielsweise ist in der hier dargestellten Ausführungsform, wie besonders gut in der Seitenansicht gemäß Figur 1B erkennbar ist, der Profilträger 3 an seiner Unterseite 7 mit einer Anbindung 8 für einen Umlenkhebel bzw. Kniehebel 9 versehen, welcher mit einer Feder 10 eines so in das Betätigungspedal 1 integrierten Force-Simulators 11 zusammenwirkt. Der Kniehebel 9, welcher aus zwei an einem Gelenk 24 zusammengeführten einzelnen Gelenkhebeln gebildet ist, von denen einer drehbar an dem Profilträger 3 und der andere axial verschiebbar an dem Lagerbock 23 fixiert ist, stützt sich über die Feder 10 an dem Lagerbock 23 ab. An dem freien Ende des verschiebbar angeordneten Gelenkhebels ist ein Nocken 25 (siehe Figur 1B) ausgebildet, welcher in einer Führungsbahn eines Führungselements geführt ist. Durch die Führung des an dem Gelenkhebel ausgebildeten Nockens 25 in der Führungsbahn einerseits und die den Umlenkhebel abstützende Feder 10 andererseits ist eine spezielle Hebelkinematik ausgebildet, welche eine weitgehend freie Gestaltung der Kraft-Weg-Kurve des Betätigungspedals 1 entsprechend den Kunden- oder Anwendungsvorgaben ermöglicht. Weiterhin ist, wie in den Figuren 1C und 1D erkennbar, eine Clutch-By-Wire-Einrichtung 12 mit einer Betätigung und einem durch Anspritzen der entsprechenden Anbindung Sensor in das Betätigungspedal 1 integriert. Somit werden alle Krafteinleitungsbereiche bzw. Zusatzfunktionen einstückig an dem Profilträger 3 ausgebildet, so dass das Betätigungspedal 1 ohne jegliche weiteren Montageschritte oder sonstige Nachbearbeitung unmittelbar nach der Entformung fertiggestellt ist. Auch eine beispielsweise bei aus dem Stand der Technik bekannten Pedalen noch erforderliche Oberflächenbehandlung eines (dort metallischen) Pedalkörpers kann hier entfallen.

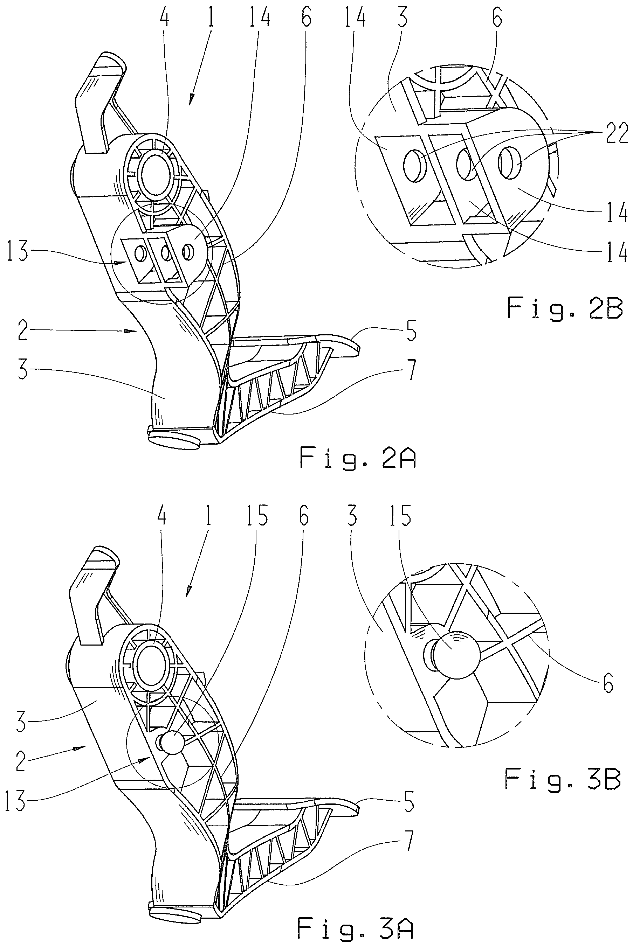

Figuren 2A und 2B zeigen Ansichten eines Betätigungspedals 1 gemäß einer weiteren Ausführungsform der Erfindung, wobei Figur 2A eine isometrische Ansicht eines Betätigungspedals 1 und Figur 2B eine Detailansicht eines Ausschnitts von Figur 2A zeigt. Das hier dargestellte Betätigungspedal 1 ist als Fußpedal für eine Feststellbremse ausgebildet und weist ebenfalls einen Pedalkörper 2 mit einem aus einem endlosfaserverstärkten Kunststoff bzw. aus Organoblech hergestellten Profilträger 3, eine Lagereinrichtung 4 zur schwenkbaren Lagerung des Betätigungspedals 1 und eine Betätigungstrittfläche 5 auf. Wie schon beider in den Figuren 1A bis 1D dargestellten Ausführungsform sind die Lagereinrichtung 4 und die Betätigungstrittfläche 5 in Kunststoff hergestellt und an den Profilträger 3 aus Organoblech im One-Shot-Verfahren angespritzt. Weiterhin werden bei diesem Prozess an den Profilträger 3, welcher auch hier als zu einer Seite hin offenes im Wesentlichen U-förmiges Profil ausgebildet ist, V-förmig und wabenartig angeordnete Verstärkungselemente 6 bzw. Verstärkungsrippen in dem von dem U-Profil umgebenen Innenraum vorgesehen bzw. angespritzt. Außerdem ist in dieser Ausführungsform eine Anbindung 13 für einen Kupplungsgeberzylinder (KGZ) vorgesehen, welche mittels einer Bolzenverbindung an dem Pedalkörper 2 fixierbar ist. Dies ist im Detail nochmals in Figur 2B dargestellt. Wie hier erkennbar ist, besteht die Anbindung 13 aus drei parallel angeordneten halbrunden Platten 14, welche jeweils in ihrer Mitte und fluchtend zueinander eine runde Durchgangsbohrung 22 aufweisen, durch die hier nicht dargestellte Bolzen hindurchführbar sind.

Figuren 3A und 3B zeigen Ansichten eines Betätigungspedals 1 gemäß noch einer weiteren Ausführungsform, welche sich von der in den Figuren 2A und 2B dargestellten Ausführungsform dadurch unterscheidet, dass die Anbindung 13 für den KGZ hier über einen an den Profilträger 3 angespritzten Kugelzapfen 15 erfolgt.

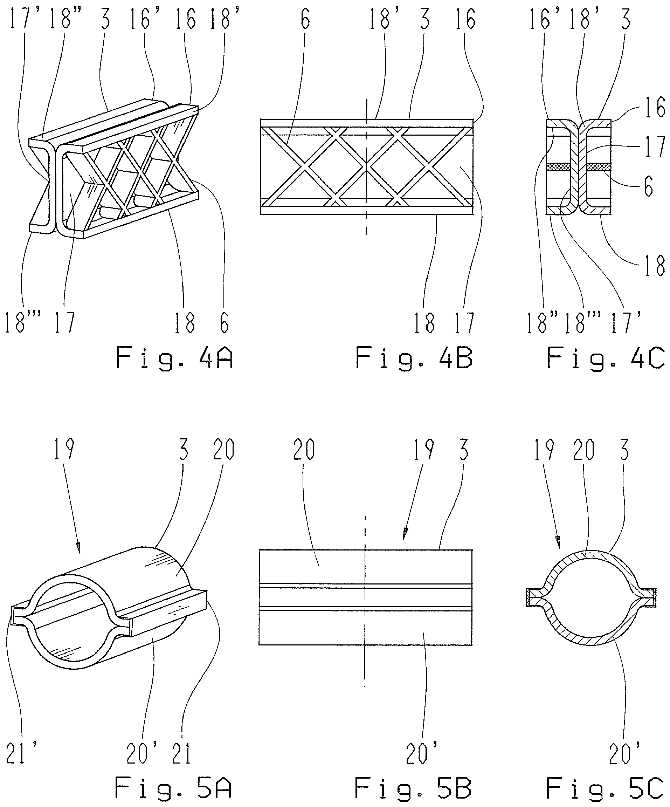

Figuren 4A bis 4C sind jeweilige Ansichten eines Abschnitts eines Profilträgers 3 eines Betätigungspedals 1 gemäß einer Ausführungsform, welcher aus zwei offenen U-förmigen Profilen, nämlich dem ersten U-förmigen Profil 16 und dem zweiten U-förmigen Profil 16' aufgebaut ist, welche jeweils ein Bodenteil 17, 17' mit jeweils zwei davon abragenden Schenkelteilen 18, 18', 18", 18''' aufweisen, wobei die Bodenteile 17, 17' der ersten und zweiten U-förmigen Profile 16, 16' aneinander anliegend angeordnet sind, so dass die jeweils davon abragenden Schenkelteile 18, 18', 18", 18''' der ersten und zweiten U-förmigen Profile 16, 16' in entgegengesetzte Richtungen weisen. Dies ist besonders gut in der in Figur 4C dargestellten Schnittansicht des Abschnitts des Profilträgers 3 erkennbar. Die U-förmigen Profile 16, 16' sind aus Organoblech hergestellt und bilden einen Profilträger 3 für ein Betätigungspedal 1, welches hier nicht vollständig dargestellt ist. Auch sind in dem von den U-förmigen Profilen 16, 16' definierten Innenraum jeweils Verstärkungselemente 6 in Form von kreuzförmig angeordneten Verstärkungsrippen eingespritzt, beispielsweise im Zuge eines One-Shot-Prozesses, wie er bereits weiter oben und in Zusammenhang mit den Figuren 1A bis 1D beschrieben worden ist. Dies ist besonders gut in der in Figur 4B dargestellten Seitenansicht des Abschnitts des Profilträgers 3 erkennbar.

Figuren 5A bis 5C zeigen jeweilige Ansichten eines Abschnitts eines Profilträgers 3 eines Betätigungspedals 1 gemäß einer weiteren Ausführungsform. Im Gegensatz zu der in den Figuren 4A bis 4C dargestellten Ausführungsform ist der Profilträger 3 hier aus einem geschlossenen rohrförmigen Profil 19 mit im Wesentlichen rundem Querschnitt (siehe Figur 4C) aufgebaut. Das rohrförmige Profil 19 ist in der hier dargestellten Ausführungsform zweiteilig aus einer ersten Rohrhälfte 20 und einer zweiten Rohrhälfte 20' mit jeweilig auskragenden Längsrändern 21, 21' aufgebaut ist, wobei die Längsränder 21, 21' der ersten und zweiten Rohrhälften 20, 20' mit Kunststoff umspritzt sind, was besonders gut in der Seitenansicht der Figur 5B erkennbar ist, um die erste und zweite Rohrhälfte 20, 20' aneinander zu fixieren und dem so hergestellten Profilträger 3 eine noch bessere Formstabilität zu verleihen. Der so gebildete Profilträger 3 kann aus Stabilitätsgründen auch an seinem verbleibenden äußeren Umfang mit einer Kunststoffschicht umspritzt sein. Alternativ oder zusätzlich kann der so gebildete Profilträger 3 auch an seinem inneren Umfang mit einer aufgespritzten Kunststoffschicht versehen sein. In der hier dargestellten Ausführungsform bildet jedoch das Organoblech selbst zumindest bereichsweise die Außenhaut bzw. die Außenkontur des Profilträgers 3 bzw. Betätigungspedals 1.

Die oben in Zusammenhang mit den Figuren 4A bis 4C und 5A bis 5C beschriebenen Profilvarianten für den Profilträger 3 sind äußerst formstabil und somit vor einem Knicken oder Ausbeulen geschützt. Das erfindungsgemäße Betätigungspedal 1 stellt darüber hinaus eine Fahrzeugkomponente mit extrem hohen Steifigkeitswerten bezüglich Torsion und Biegung bei gleichzeitig sehr geringer Bauteilmasse bereit. Im Ergebnis wird somit deutlich, dass mit der Erfindung ein Betätigungspedal geschaffen wird, das kostengünstig herstellbar ist und eine minimale Anzahl an Bauteilen sowie eine sehr geringe Masse aufweist, wobei gleichzeitig hohe Anforderungen an die Steifigkeit und damit auch an die Betriebssicherheit und das Betätigungsgefühl, beispielsweise beim Kupplungsvorgang, erfüllt werden. Das erfindungsgemäße Betätigungspedal kann zudem einstückig diverse Funktionselemente, Kraftangriffspunkte und Anschlussbauteile umfassen, zusätzliche Montageschritte und die Notwendigkeit zur Oberflächenbehandlung können entfallen.

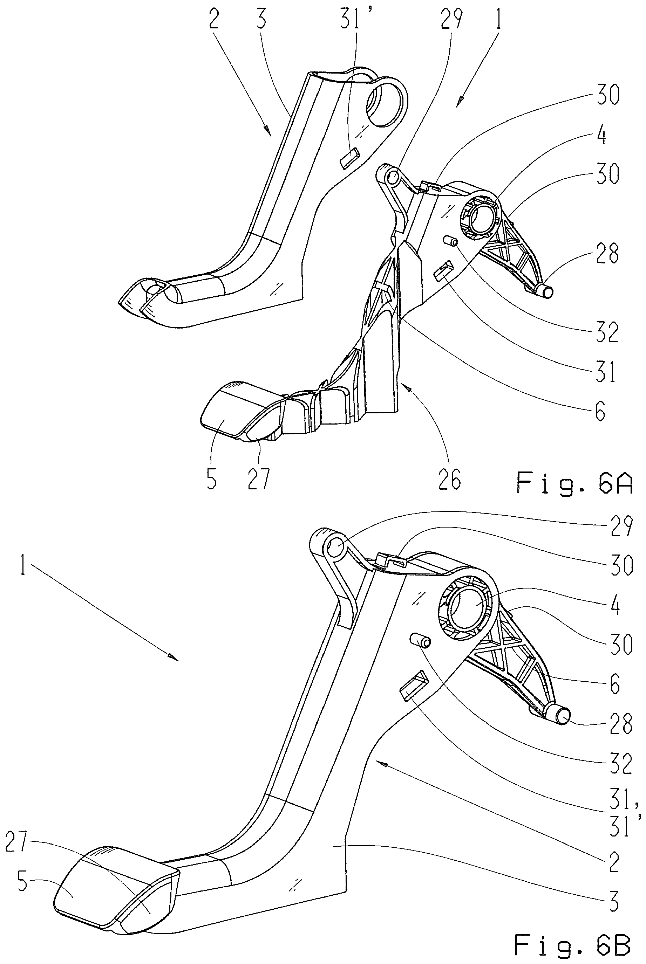

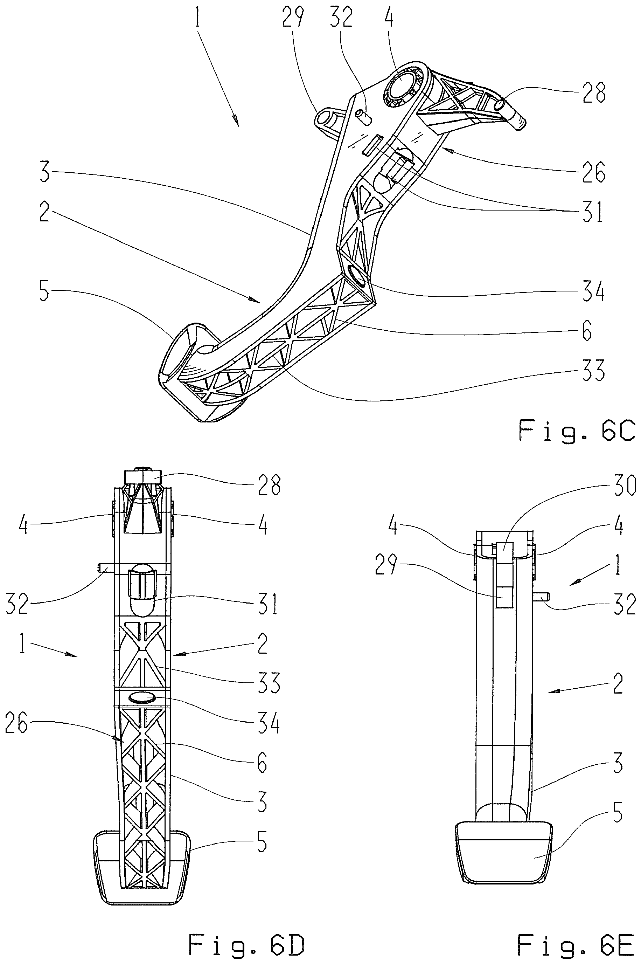

Figuren 6A bis 6E zeigen jeweilige Ansichten eines Pedalkörpers 2 eines Betätigungspedals 1 gemäß einer weiteren Ausführungsform. Figur 6A zeigt eine isometrische Ansicht eines Betätigungspedals 1 in auseinandergezogenen Einzelteilen, d. h. der Profilträger 3 aus Organoblech getrennt von dem einstückigen Füllkörper 26 aus Spritzguss-Kunststoff, Figur 6B das Betätigungspedal 1 in zusammengesetztem Zustand, Figur 6C eine Ansicht des Betätigungspedals 1 schräg von unten, Figur 6D eine Ansicht des Betätigungspedals 1 von unten und Figur 6E eine Ansicht des Betätigungspedals 1 von oben. Wie in Figur 6A gut erkennbar, ist der Profilträger 3 nach unten offen ausgebildet; der Füllkörper 26 umfasst sämtliche strukturellen Komponenten des Betätigungspedals 1 und ist im Spritzgussverfahren in einstücker Bauweise hergestellt. In der hier dargestellten Ausführungsform umfasst der Füllkörper 26 eine Betätigungstrittfläche 5 mit einem Abweiser 27 (Abweiser-Integration; zur Zeit ist dies eine Funktion des Pedalgummis, welches hier nicht dargestellt ist), die wabenförmig angeordneten Verstärkungselemente 6, eine Aufnahme 28 für eine Übertotpunktfeder, eine Aufnahme 29 für eine Rückzugfeder, die Lagereinrichtung 4 und Schaltnocken 30 zur Identifizierung der Schaltstellung sowie eine Aufnahme 31 für einen KGZ bzw. eine Druckstange, welche als Aufnahme bei Bezugszeichen 31' eine Entsprechung in dem Profilträger 3 findet. Weiterhin ist an dem Füllkörper 26 einstückig eine Struktur 32 zur Betätigung eines Drehwinkelsensors ausgebildet. Wie darüber hinaus in den Figuren 6C und 6D erkennbar ist, ist an der Unterseite 33 des Füllkörpers 26 schließlich noch ein Pedalanschlag 34 vorgesehen.

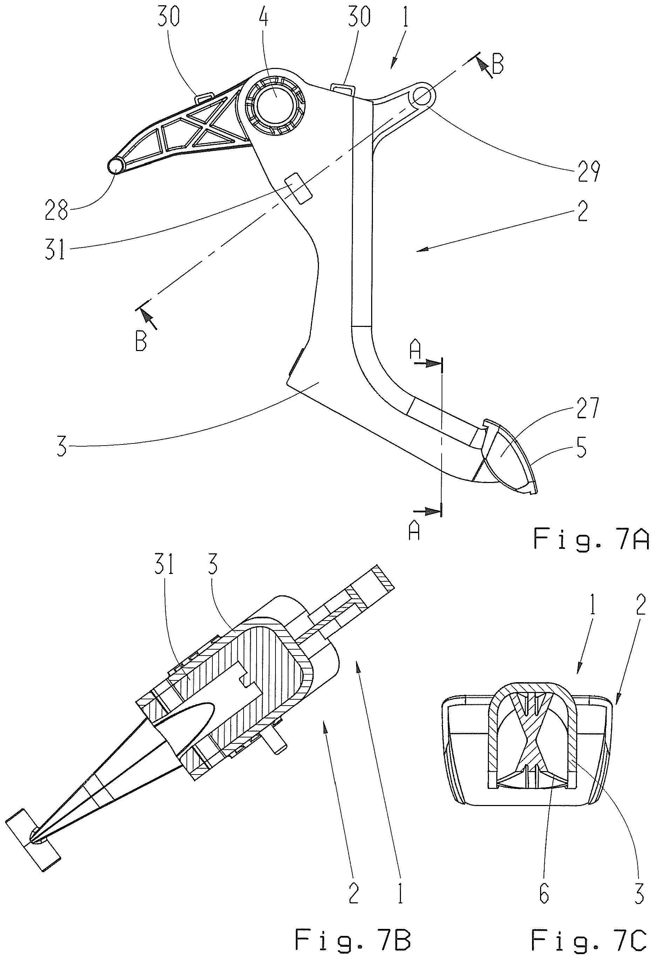

Figuren 7A bis 7C zeigen jeweilige weitere Ansichten des in den Figuren 6A bis 6E dargestellten Pedalkörpers 2, wobei Figur 7A eine Seitenansicht des Pedalkörpers 2, Figur 7B eine Schnittansicht durch den Pedalkörper 2 entlang der Linie B-B in Figur 7A im Bereich der Aufnahme 31 des KGZ und Figur 7C eine Schnittansicht durch den Pedalkörper 2 entlang der Linie A-A in Figur 7A darstellt. Wie besonders gut in den Schnittansichten der Figuren 7B und 7C erkennbar ist, weist der Profilträger 3 hier ein U-förmiges Profil auf, welches nach unten offen ist. Die Struktur speziell der Verstärkungselemente 6 ist darüber hinaus in Figur 7C gut erkennbar.

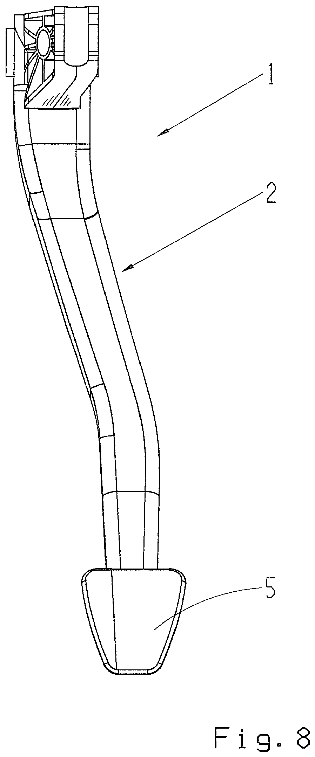

Figur 8 zeigt eine Vorderansicht eines Betätigungspedals 1 gemäß noch einer weiteren Ausführungsform, welches hier im Gegensatz zu den bereits beschriebenen Ausführungsformen einen Pedalkörper 2 in gekröpfter Ausgestaltung aufweist. Dies kann im Hinblick auf bestimmte Bauraumerfordernisse vorteilhaft sein.

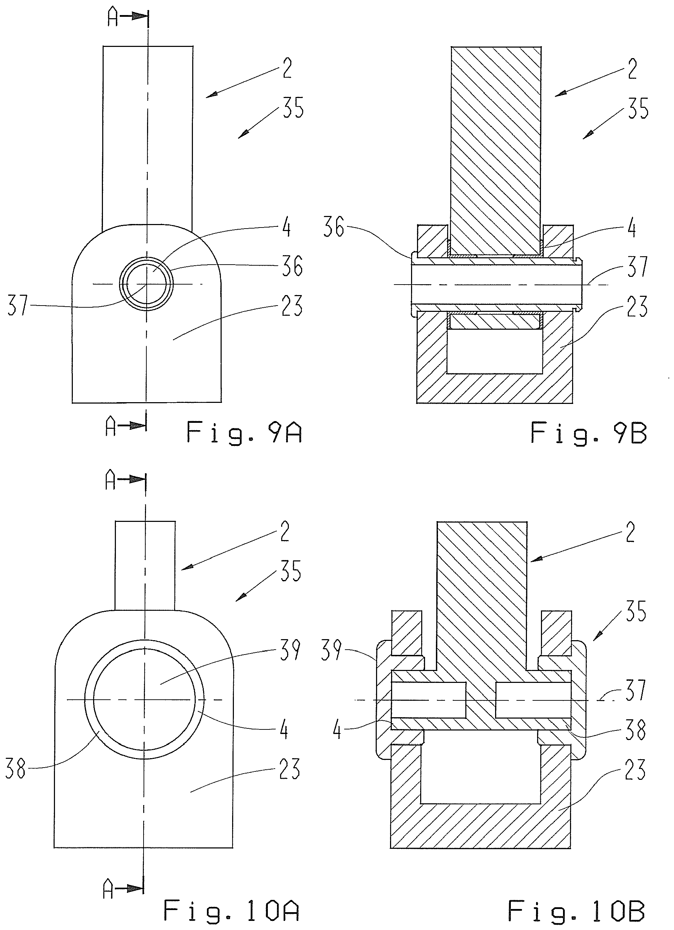

Figuren 9A und 9B zeigen jeweilige schematische Ansichten einer Pedalhebellagerung 35 gemäß einer Ausführungsform, wobei Figur 9A eine Seitenansicht der Pedalhebellagerung 35 und Figur 9B eine Schnittansicht entlang der Linie A-A in Figur 9A zeigt. In den Figuren ist der Pedalkörper 2 des Betätigungspedals 1 lediglich schematisch angedeutet. Der Pedalkörper 2 ist über seine Lagereinrichtung 4 mittels eines Lagerbolzens 36, welcher in der Lagereinrichtung 4 aufgenommen ist, um die Schwenkachse 37 herum schwenkbar in einem Lagerbock 23, welcher ebenfalls nur schematisch angedeutet ist, gelagert.

Figuren 10A und 10B zeigen jeweilige schematische Ansichten einer Pedalhebellagerung 35 gemäß noch einer weiteren Ausführungsform, wobei Figur 10A eine Seitenansicht der Pedalhebellagerung 35 und Figur 10B eine Schnittansicht entlang der Linie A-A in Figur 10A zeigt. Im Gegensatz zu der in den Figuren 9A und 9B dargestellten Ausführungsform ist die hier dargestellte Ausführungsform gabelförmig ausgebildet ist. Hierbei ist die Lagereinrichtung 4 als von dem Pedalkörper 2 beidseitig abragende Achse bzw. Achsstummel 38 ausgebildet, welcher in einer Gleitlagerbuchse 39 gelagert ist bzw. sind.

### Bezugszeichen

- 1: Betätigungspedal
- 2: Pedalkörper
- 3: Profilträger
- 4: Lagereinrichtung
- 5: Betätigungstrittfläche
- 6: Verstärkungselemente
- 7: Unterseite des Profilträgers
- 8: Anbindung (Force-Simulator)
- 9: Kniehebel
- 10: Feder
- 11: Force-Simulator
- 12: Clutch-by-Wire-Einrichtung
- 13: Anbindung Kupplungsgeberzylinder (KGZ)
- 14: Platten
- 15: Kugelzapfen
- 16, 16': erstes und zweites U-förmiges Profil
- 17, 17': Bodenteile
- 18, 18', 18", 18''': Schenkelteile
- 19: rohrförmiges Profil
- 20, 20': erste und zweite Rohrhälfte
- 21, 21': auskragende Längsränder
- 22: Durchgangsbohrungen
- 23: Lagerbock
- 24: Gelenk
- 25: Nocken
- 26: Füllkörper
- 27: Abweiser
- 28: Aufnahme für Übertotfeder
- 29: Aufnahme für Rückzugfeder
- 30: Schaltnocken
- 31, 31': Aufnahme für KGZ
- 32: Struktur zur Betätigung eines Drehwinkelsensors
- 33: Unterseite des Füllkörpers
- 34: Pedalanschlag
- 35: Pedalhebellagerung
- 36: Lagerbolzen
- 37: Schwenkachse
- 38: Achsstummel
- 39: Gleitlagerbuchse

## Patentansprüche

1. Betätigungspedal (1) für ein Kraftfahrzeug in Form eines Kupplungspedals oder Fußpedals für eine Feststellbremse, wobei das Betätigungspedal (1) einen Pedalkörper (2) mit einem aus einem endlosfaserverstärkten Kunststoff hergestellten Profilträger (3), eine Lagereinrichtung (4) zur schwenkbaren Lagerung des Betätigungspedals (1) und eine Betätigungstrittfläche (5) umfasst, wobei die Lagereinrichtung (4) und die Betätigungstrittfläche (5) aus Kunststoff hergestellt sind, **dadurch gekennzeichnet, dass** der Profilträger (3) zumindest abschnittsweise als ein offenes U-förmiges Profil (16, 16'), als offenes L-förmiges oder als geschlossenes rohrförmiges Profil (19) in Form eines vorgefertigten Organoblech-Einlegers ausgebildet ist, an welches die Lagereinrichtung (4), die Betätigungstrittfläche (5) und weitere Kunststoffelemente angespritzt sind.

2. Betätigungspedal (1) gemäß Anspruch 1, **dadurch**
**gekennzeichnet, dass** der Profilträger (3) mit der daran angespritzten Lagereinrichtung (4), Betätigungsfläche (5) und den weiteren Kunststoffelementen mittels eines One-Shot-Verfahrens hergestellt ist.

3. Betätigungspedal (1) gemäß Anspruch 1 oder 2, **dadurch**
**gekennzeichnet, dass** bei einer Ausbildung des Profilträgers (3) als geschlossenen rohrförmiges Profil (19) das geschlossene rohrförmige Profil (19) zweiteilig aus einer ersten Rohrhälfte (20) und einer zweiten Rohrhälfte (20') mit jeweilig auskragenden Längsrändern (21, 21') aufgebaut ist, wobei die Längsränder (21, 21') der ersten Rohrhälfte (20) und der zweiten Rohrhälfte (20') mit Kunststoff umspritzt sind, um die erste Rohrhälfte (20) und die zweite Rohrhälfte (20') aneinander zu fixieren.

4. Betätigungspedal (1) gemäß Anspruch 1 oder 2, **dadurch**
**gekennzeichnet, dass** bei einer Ausbildung des Profilträgers (3) als offenes U-förmiges Profil (16, 16') dieses Profil zu einer Unterseite (7) des Profilträgers (3) oder seitlich offen ist.

5. Betätigungspedal (1) gemäß Anspruch 1 oder 2 oder 4, **dadurch**
**gekennzeichnet, dass** der Profilträger (3) ein erstes und ein zweites offenes U-förmiges Profil (16, 16') aufweist, welche jeweils ein Bodenteil (17, 17') mit zwei davon abragenden Schenkelteilen (18, 18', 18" 18''') aufweisen, wobei die Bodenteile (17, 17') des ersten U-förmigen Profils (16) und des zweiten U-förmigen Profils (16') aneinander anliegend angeordnet sind, so dass die jeweils davon abragenden Schenkelteile (18, 18', 18", 18''') des ersten und zweiten U-förmigen Profils (16, 16') in entgegengesetzte Richtungen weisen.

6. Betätigungspedal (1) nach einem der Ansprüche 1 bis 5, **dadurch**
**gekennzeichnet, dass** der Profilträger (3) gekröpft ausgebildet ist, und dass an dem Profilträger (3) Verstärkungselemente (6), insbesondere kreuzweise, V-förmig oder wabenstrukturartig angeordnete Verstärkungsrippen, angespritzt sind.

7. Betätigungspedal (1) gemäß einem der Ansprüche 1 bis 6, **dadurch**
**gekennzeichnet, dass** die an den Profilträger (3) angespritzten Kunststoffelemente, die Betätigungsplatte (5) und die Lagereinrichtung (4) aus einem Thermoplast, insbesondere aus Polyamid, vorzugsweise PA6 GF40 oder, Polypropylen gebildet sind.

8. Betätigungspedal (1) gemäß einem der Ansprüche 1 bis 7, **dadurch**
**gekennzeichnet, dass** eine Matrix des Organoblech-Materials in einem mit den angespritzten Kunststoffelementen kompatiblen, vorzugsweise identischen Kunststoff ausgebildet ist, höchst vorzugsweise Polyamid oder Polypropylen.

9. Betätigungspedal (1) gemäß einem der Ansprüche 1 bis 8, **dadurch**
**gekennzeichnet, dass** der Profilträger (3) die Struktur des Pedalkörpers (2) und vorzugsweise zumindest abschnittweise eine Außenkontur des Pedalkörpers (2) bildet.

10. Betätigungspedal (1) gemäß einem der Ansprüche 1 bis 9, **dadurch**
**gekennzeichnet, dass** die die Kunststoffelemente Funktionselemente und/oder Aufnahmen oder Anbindungen (8, 13) für Funktionselemente umfassen.

11. Betätigungspedal (1) gemäß einem der Ansprüche 1 bis 10, **dadurch**
**gekennzeichnet, dass** die Kunststoffelemente eine Aufnahme (28) für eine Übertotpunktfeder, eine Aufnahme (29) für eine Rückzugfeder, eine Aufnahme für einen Kupplungsgeberzylinder (31, 31') und/oder eine Aufnahme für eine Druckstange umfassen.

12. Betätigungspedal (1) gemäß einem der Ansprüche 1 bis 11, **dadurch**
**gekennzeichnet, dass** die Kunststoffelemente einen Schaltnocken (30) zur Identifizierung einer Schaltstellung, einen Anschlag (34), insbesondere einen Pedalanschlag, ein Element zur Betätigung eines Drehwinkelsensors (32) und/oder ein Abweiserelement (27) umfassen.

13. Betätigungspedal (1) gemäß einem der Ansprüche 1 bis 12, **dadurch**
**gekennzeichnet, dass** eine Clutch-by-Wire-Einrichtung (12) in das Betätigungspedal (1) integriert ist.

14. Betätigungspedal (1) gemäß einem der Ansprüche 1 bis 13, **dadurch**
**gekennzeichnet, dass** ein Force-Simulator (11) in das Betätigungspedal (1) integriert ist.

15. Verwendung eines Organoblech-Einlegers für ein Betätigungspedal (1) gemäß einem der Ansprüche 1 bis 14.

## Claims

1. Actuating pedal (1) for a motor vehicle in the form of a clutch pedal or foot pedal for an immobilizing brake, wherein the actuating pedal (1) comprises a pedal body (2) with a profile member (3) produced from a plastic reinforced with endless fibres, a bearing device (4) for the pivotable mounting of the actuating pedal (1), and an actuating tread surface (5), wherein the bearing device (4) and the actuating tread surface (5) are produced from plastic, **characterized in that** the profile member (3) is formed at least in certain portions as an open U-shaped profile (16, 16'), as an open L-shaped or as a closed tubular profile (19) in the form of a prefabricated organic sheet insert onto which the bearing device (4), the actuating tread surface (5) and further plastics elements are injection-moulded.

2. Actuating pedal (1) according to Claim 1, **characterized in that** the profile member (3) with the bearing device (4), actuating surface (5) and the further plastics elements injection-moulded thereon is produced by means of a one-shot process.

3. Actuating pedal (1) according to Claim 1 or 2, **characterized in that**, in the case of the profile member (3) being formed as a closed tubular profile (19), the closed tubular profile (19) is constructed in two parts from a first tube half (20) and a second tube half (20') with respectively projecting longitudinal edges (21, 21'), wherein the longitudinal edges (21, 21') of the first tube half (20) and the second tube half (20') are encapsulated in plastic by injection moulding in order to fix the first tube half (20) and the second tube half (20') to one another.

4. Actuating pedal (1) according to Claim 1 or 2, **characterized in that**, in the case of the profile member (3) being formed as an open U-shaped profile (16, 16'), said profile is open to a bottom side (7) of the profile member (3) or laterally.

5. Actuating pedal (1) according to Claim 1 or 2 or 4, **characterized in that** the profile member (3) has a first and a second open U-shaped profile (16, 16') which each have a base part (17, 17') with two limb parts (18, 18', 18'', 18''') projecting therefrom, wherein the base parts (17, 17') of the first U-shaped profile (16) and of the second U-shaped profile (16') are arranged so as to bear against one another such that the limb parts (18, 18', 18'', 18'''), respectively projecting from said base parts, of the first and second U-shaped profile (16, 16') point in opposite directions.

6. Actuating pedal (1) according to any of Claims 1 to 5, **characterized in that** the profile member (3) is of cranked form, and **in that** reinforcement elements (6), in particular reinforcement ribs arranged crosswise, in a V shape or in the manner of a honeycomb structure, are injection-moulded on the profile member (3).

7. Actuating pedal (1) according to any of Claims 1 to 6, **characterized in that** the plastics elements injection-moulded onto the profile member (3), the actuating plate (5) and the bearing device (4) are formed from a thermoplastic, in particular from polyamide, preferably PA6 GF40, or polypropylene.

8. Actuating pedal (1) according to any of Claims 1 to 7, **characterized in that** a matrix of the organic sheet material is formed from a plastic which is compatible with the injection-moulded-on plastics elements, preferably an identical plastic, most preferably polyamide or polypropylene.

9. Actuating pedal (1) according to any of Claims 1 to 8, **characterized in that** the profile member (3) forms the structure of the pedal body (2) and preferably, at least in certain portions, an outer contour of the pedal body (2) .

10. Actuating pedal (1) according to any of Claims 1 to 9, **characterized in that** the plastics elements comprise functional elements and/or receptacles or attachments (8, 13) for functional elements.

11. Actuating pedal (1) according to any of Claims 1 to 10, **characterized in that** the plastics elements comprise a receptacle (28) for an over-centre spring, a receptacle (29) for a retraction spring, a receptacle for a clutch master cylinder (31, 31') and/or a receptacle for a thrust rod.

12. Actuating pedal (1) according to any of Claims 1 to 11, **characterized in that** the plastics elements comprise a switching cam (30) for identification of a switching position, a stop (34), in particular a pedal stop, an element for actuating a rotational angle sensor (32), and/or a deflector element (27).

13. Actuating pedal (1) according to any of Claims 1 to 12, **characterized in that** a clutch-by-wire device (12) is integrated into the actuating pedal (1).

14. Actuating pedal (1) according to any of Claims 1 to 13, **characterized in that** a force simulator (11) is integrated into the actuating pedal (1).

15. Use of an organic sheet insert for an actuating pedal (1) according to any of Claims 1 to 14.

## Revendications

1. Pédale d'actionnement (1) pour un véhicule automobile, sous la forme d'une pédale d'embrayage ou d'une pédale pour un frein de stationnement, la pédale d'actionnement (1) comportant un corps de pédale (2) doté d'un support profilé (3) fabriqué à partir d'une matière synthétique renforcée par des fibres sans fin, un dispositif de palier (4) servant au montage pivotant de la pédale d'actionnement (1) et une surface d'actionnement par appui du pied (5), le dispositif de palier (4) et la surface d'actionnement par appui du pied (5) étant fabriqués à partir de matière synthétique, **caractérisée en ce que** le support profilé (3) est réalisé au moins dans certaines parties en tant que profilé ouvert (16, 16') en forme de U, en tant que profilé ouvert en forme de L ou en tant que profilé tubulaire fermé (19) sous la forme d'un insert préfabriqué en composite à matrice thermoplastique et à fibres longues, insert sur lequel sont moulés par injection le dispositif de palier (4), la surface d'actionnement par appui du pied (5) et d'autres éléments en matière synthétique.

2. Pédale d'actionnement (1) selon la revendication 1, **caractérisée en ce que** le support profilé (3) sur lequel sont moulés par injection le dispositif de palier (4), la surface d'actionnement (5) et les autres éléments en matière synthétique est fabriqué suivant un procédé direct.

3. Pédale d'actionnement (1) selon la revendication 1 ou 2, **caractérisée en ce que** lors d'une réalisation du support profilé (3) en tant que profilé tubulaire fermé (19), le profilé tubulaire fermé (19) est construit en deux parties à partir d'une première moitié tubulaire (20) et d'une deuxième moitié tubulaire (20') comprenant des bords longitudinaux (21, 21') faisant saillie respectivement, les bords longitudinaux (21, 21') de la première moitié tubulaire (20) et de la deuxième moitié tubulaire (20') étant enrobés par injection de matière synthétique afin de fixer l'une à l'autre la première moitié tubulaire (20) et la deuxième moitié tubulaire (20').

4. Pédale d'actionnement (1) selon la revendication 1 ou 2, **caractérisée en ce que** lors d'une réalisation du support profilé (3) en tant que profilé ouvert (16, 16') en forme de U, ce profilé est ouvert vers un côté inférieur (7) du support profilé (3) ou est ouvert latéralement.

5. Pédale d'actionnement (1) selon la revendication 1, 2 ou 4, **caractérisée en ce que** le support profilé (3) comprend un premier et un deuxième profilé ouvert (16, 16') en forme de U, lesquels comprennent respectivement une partie de fond (17, 17') comprenant deux parties de branches (18, 18', 18'', 18''') faisant saillie à partir de celle-ci, les parties de fond (17, 17') du premier profilé (16) en forme de U et du deuxième profilé (16') en forme de U étant disposées de manière à s'appliquer l'une contre l'autre, de telle sorte que les parties de branches (18, 18', 18'', 18'''), faisant saillie respectivement à partir de celles-ci, du premier et du deuxième profilé (16, 16') en forme de U soient orientées en sens inverses.

6. Pédale d'actionnement (1) selon l'une des revendications 1 à 5, **caractérisée en ce que** le support profilé (3) est de forme coudée, et **en ce que** des éléments de renforcement (6), en particulier des nervures de renforcement disposées en croix, en forme de V ou à la manière d'une structure en nid d'abeilles, sont moulés par injection sur le support profilé (3).

7. Pédale d'actionnement (1) selon l'une des revendications 1 à 6, **caractérisée en ce que** les éléments en matière synthétique moulés par injection sur le support profilé (3), la plaque d'actionnement (5) et le dispositif de palier (4) sont formés à partir d'une matière thermoplastique, en particulier à partir de polyamide, de préférence de PA6 GF40, ou de polypropylène.

8. Pédale d'actionnement (1) selon l'une des revendications 1 à 7, **caractérisée en ce qu'**une matrice du matériau composite à matrice thermoplastique et à fibres longues est réalisée dans une matière synthétique compatible avec les éléments en matière synthétique moulés par injection, de préférence identique à ceux-ci, de manière tout particulièrement préférée en polyamide ou en polypropylène.

9. Pédale d'actionnement (1) selon l'une des revendications 1 à 8, **caractérisée en ce que** le support profilé (3) forme la structure du corps de pédale (2) et de préférence, au moins dans certaines parties, un contour extérieur du corps de pédale (2).

10. Pédale d'actionnement (1) selon l'une des revendications 1 à 9, **caractérisée en ce que** les éléments en matière synthétique comportent des éléments fonctionnels et/ou des logements ou des liaisons (8, 13) pour les éléments fonctionnels.

11. Pédale d'actionnement (1) selon l'une des revendications 1 à 10, **caractérisée en ce que** les éléments en matière synthétique comportent un logement (28) pour un ressort de dépassement de point de basculement, un logement (29) pour un ressort de rappel, un logement pour un maître-cylindre d'embrayage (31, 31') et/ou un logement pour une tige de pression.

12. Pédale d'actionnement (1) selon l'une des revendications 1 à 11, **caractérisée en ce que** les éléments en matière synthétique comportent une came de commande (30) pour l'identification d'une position de commande, une butée (34), en particulier une butée de pédale, un élément pour l'actionnement d'un capteur d'angle de rotation (32) et/ou un élément déflecteur (27) .

13. Pédale d'actionnement (1) selon l'une des revendications 1 à 12, **caractérisée en ce qu'**un dispositif d'embrayage à commande électrique (« clutch by wire ») (12) est intégré dans la pédale d'actionnement (1).

14. Pédale d'actionnement (1) selon l'une des revendications 1 à 13, **caractérisée en ce qu'**un simulateur de force (11) est intégré dans la pédale d'actionnement (1).

15. Utilisation d'un insert en composite à matrice thermoplastique et à fibres longues pour une pédale d'actionnement (1) selon l'une des revendications 1 à 14.
